# EUROPÄISCHE PATENTANMELDUNG

(11) **EP 1 980 351 A2**
(43) Veröffentlichungstag der Anmeldung: **15.10.2008**
(21) Anmeldenummer: 08002407.8
(22) Anmeldetag: 09.02.2008
(51) Int. Cl.: B23D 49/16

(54) **Hubsägemaschine**

(30) Priorität: 13.04.2007 DE 102007017408
(71) Anmelder: Festool GmbH, 73240 Wendlingen (DE)
(72) Erfinder: Reuß, Torsten, 73265 Dettingen (DE)
(74) Vertreter: Bregenzer, Michael

(57) **Zusammenfassung**

Eine Hubsägemaschine, insbesondere Stichsäge, weist eine beim Betrieb eine hin und her gehende Hubbewegung ausführende Sägeeinheit (Hubstange 7), eine Antriebseinrichtung zum Antreiben der Sägeeinheit und eine Massenausgleichseinrichtung zum Ausgleichen der bei der Hubbewegung der Sägeeinheit auftretenden Trägheitskraft auf. Die Massenausgleichseinrichtung bildet einen beim Betrieb eine hin und her gehende, der Hubbewegung der Sägeeinheit entgegengesetzte Ausgleichsbewegung ausführenden Schwerpunkt. Die Massenausgleichseinrichtung weist zwei beim Betrieb gegensinnig zueinander rotatorisch umlaufende Ausgleichsmassenanordnungen (16, 17) auf, derart, dass sich die Einzelschwerpunkte der beiden Ausgleichsmassenanordnungen (16, 17) zum die Ausgleichsbewegung ausführenden Schwerpunkt addieren.

## Beschreibung

Die Erfindung betrifft eine Hubsägemaschine, insbesondere Stichsäge, mit einer beim Betrieb eine hin und her gehende Hubbewegung ausführenden Sägeeinheit, einer Antriebseinrichtung zum Antreiben der Sägeeinheit und einer Massenausgleichseinrichtung zum Ausgleichen der bei der Hubbewegung der Sägeeinheit auftretenden Trägheitskraft, wobei die Massenausgleichseinrichtung einen beim Betrieb eine hin und her gehende, der Hubbewegung der Sägeeinheit entgegengesetzte Ausgleichsbewegung ausführenden Schwerpunkt bildet.

Beim Betrieb von Hubsägemaschinen tritt durch die sich bewegende Sägeeinheit eine sich im Takt der Hubbewegung verändernde Trägheitskraft auf, die bei fehlender Massenausgleichseinrichtung stoßartig auf den Benutzer einwirkt. Dies belastet den Benutzer und beeinträchtigt die Genauigkeit beim Sägen.

Diesem Nachteil wird bei einer aus der EP 1 074 327 B1 bekannten Stichsäge der eingangs genannten Art durch die Massenausgleichseinrichtung begegnet, mit der die hin und her gehende Trägheitskraft der Sägeeinheit ausgeglichen wird, indem sie einen im gleichen Takt, dabei jedoch entgegengesetzt hin und her gehenden Schwerpunkt bildet, so dass der Gesamtschwerpunkt von Sägeeinheit und Massenausgleichseinrichtung im Wesentlichen raumfest stehen bleibt.

Bei der bekannten Stichsäge weist die Massenausgleichseinrichtung einen plattenartigen Massekörper auf, der in linearer Richtung hin und her bewegbar geführt ist und mittels eines Exzentergliedes angetrieben wird, das in eine quer zur Bewegungsrichtung des Massekörpers längliche Lagerausnehmung eingreift.

Bei jedem Bewegungszyklus muss der Massekörper zweimal zwischen seinen Umkehrpunkten in entgegengesetzter Richtung beschleunigt werden. Dies und die zwischen dem Massekörper und dem Exzenterglied auftretende Reibung stellen Leistungsverluste dar und verschlechtern daher den Wirkungsgrad der Maschine.

Der vorliegenden Erfindung liegt deshalb die Aufgabe zugrunde, eine Hubsägemaschine der eingangs genannten Art zu schaffen, die eine möglichst verlustarm arbeitende Massenausgleichseinrichtung aufweist.

Diese Aufgabe wird erfindungsgemäß dadurch gelöst, dass die Massenausgleichseinrichtung zwei beim Betrieb gegensinnig zueinander rotatorisch umlaufende Ausgleichskörperanordnungen aufweist, derart, dass sich die Einzelschwerpunkte der beiden Ausgleichskörperanordnungen zum die Ausgleichsbewegung ausführenden Schwerpunkt addieren.

Auf diese Weise laufen die beiden Massenausgleichsanordnungen mit gleicher Geschwindigkeit in entgegengesetzten Richtungen um, so dass sich der aus ihren Einzelschwerpunkten zusammensetzende Schwerpunkt in der Mitte zwischen den beiden Ausgleichsmassenanordnungen befindet und sich linear hin und her bewegt. Es versteht sich, dass die beiden Ausgleichsmassenanordnungen einander entsprechend große Massen aufweisen.

Dies ergibt einen verlustarmen Betrieb.

Ferner entfallen die bei der bekannten Maschine durch die lineare Führung des plattenförmigen Massekörpers und die Bewegung des Exzentergliedes in der Lagerausnehmung des Massekörpers zu befürchtenden Geräusche.

Ein weiterer Vorteil besteht darin, dass die erforderliche Größe der Massen vom Radius ihrer Umlaufbahn abhängt, so dass man bei entsprechend großem Radius mit verhältnismäßig kleinen Massen auskommt.

Zweckmäßige Ausgestaltungen der Erfindung sind in den Unteransprüchen angegeben.

Nachstehend werden Ausführungsbeispiele der Erfindung anhand der Zeichnung im Einzelnen erläutert. Es zeigen:
- Figur 1: den vorliegend interessierenden Bereich (Sägeeinheit mit Sägeblatt und Hubstange sowie Antriebseinrichtung ohne Motor) einer Stichsäge mit einer ersten Ausführungsform der erfindungsgemäßen Massenausgleichseinrichtung in Seitenansicht gemäß Pfeil I in Figur 2,
- Figur 2: die Anordnung nach Figur 1 ohne das Sägeblatt und die das Sägeblatt mit der Hubstange verbindenden Befestigungseinrichtung in Vorderansicht gemäß Pfeil II in Figur 1,
- Figur 3: die Anordnung nach Figur 2 in der Figur 1 entgegengesetzter Seitenansicht gemäß Pfeil III,
- Figur 4: die gleiche Anordnung in Schrägansicht von der Seite der Figur 3 her gesehen und
- Figuren 5: und 6 eine zweite Ausführungsform der erfindungsgemäßen Massenausgleichseinrichtung ohne die Sägeeinheit und weitere Einzelteile der Antriebseinrichtung in der in Figur 2 entsprechenden Vorderansicht, jeweils in einer anderen Relativstellung der beiden Ausgleichsmassenanordnungen zueinander.

Vorliegend handelt es sich um eine Stichsäge mit - sieht man von der Antriebseinrichtung und der Massenausgleichseinrichtung ab - üblichem Aufbau. Da solche Stichsägen und ihre Anwendung allgemein bekannt sind, wird nachstehend nur der in Zusammenhang mit der vorliegenden Erfindung interessierende Bereich der Stichsäge erläutert.

Die Stichsäge dient zum Ausführen von Sägeschnitten in Werkstücken. Dabei weist die Stichsäge einen nicht dargestellten Sägetisch auf, mit dem sie auf das jeweilige Werkstück aufgelegt wird, so dass sie auf dem Werkstück in Vorschubrichtung 1 vorgeschoben werden kann.

Die Stichsäge enthält eine Antriebseinrichtung 2 mit einem nicht dargestellten Antriebsmotor, der eine Antriebswelle 3 treibt, die mittels Lagereinrichtungen 4 im Maschinengehäuse drehbar gelagert ist. Die Antriebseinrichtung 2 dient zum Antreiben einer im vorderen Bereich der Stichsäge angeordneten Sägeeinheit 6 zu einer in Richtung gemäß Doppelpfeil 5 periodisch hin und her gehenden Hubbewegung. Die Sägeeinheit 6 enthält eine im Maschinengehäuse in üblicher Weise gelagerte Hubstange 7, an deren beim Sägen dem Werkstück zugewandten Ende eine Befestigungseinrichtung 8 angeordnet ist, über die ein in Verlängerung der Hubstange 7 verlaufendes Sägeblatt 9 austauschbar mit der Hubstange 7 verbunden wird. Die die Hubbewegung ausführenden Teile bilden zusammen die Sägeeinheit 6.

An der Hubstange 7 ist ein sich quer zur Hubbewegungsrichtung 5 erstreckendes Kulissenteil 10 feststehend angeordnet, das eine in Querrichtung 11 verlaufende Führungsnut 12 bildet. Der Führungsnut 12 ist ein Mitnahmeelement 13 zugeordnet, das exzentrisch an einem beim Betrieb von der Antriebswelle 3 her angetriebenen Antriebsrad 14 - ein Zahnrad - angeordnet ist und stirnseitig vom Antriebsrad 14 absteht. Das Mitnahmeelement 13 greift in die Führungsnut 12 ein und ist dort in Querrichtung 11 bewegbar gelagert. Dabei wird das Mitnahmeelement 13 zweckmäßigerweise von einer Rolle oder einer drehbar gelagerten Hülse gebildet.

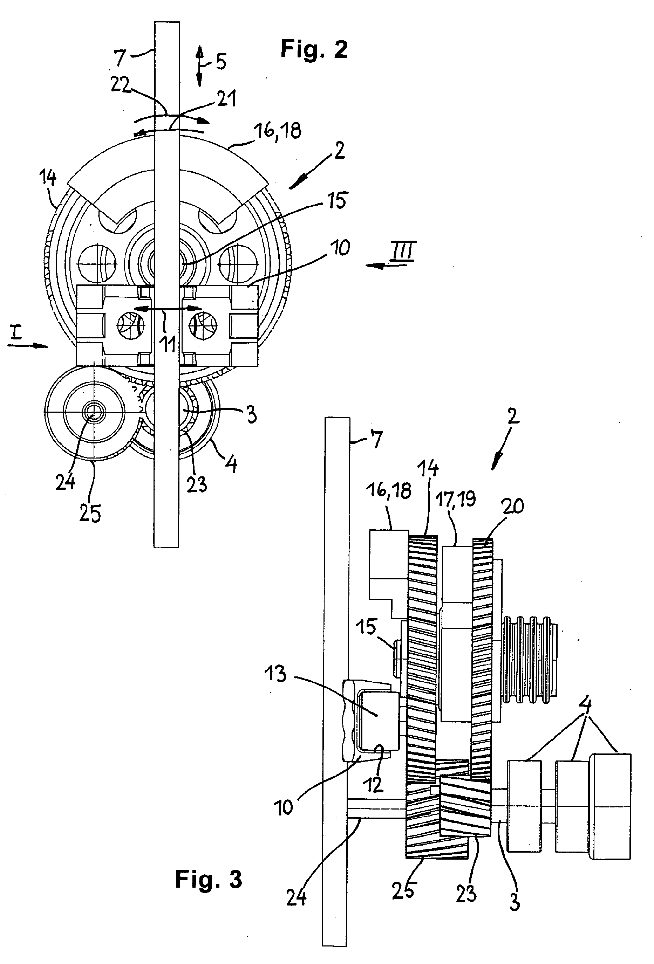

Das Antriebsrad 14 ist auf einer Lagerachse 15 drehbar gelagert, die parallel zur Antriebswelle 3 und dabei rechtwinkelig zur Hubstange 7 und zur Querrichtung 11 so verläuft, dass sie in Vorderansicht (Figur 2) fluchtend hinter der Hubstange 7 angeordnet ist. Dreht sich das Antriebsrad 14 um die Lagerachse 15, verlagert sich das Mitnahmeelement 13 in Querrichtung 11 in der Führungsnut 12 und nimmt dabei das Kulissenteil 10 und mit diesem die Hubstange 7 in Hubbewegungsrichtung 5 mit.

Bei der Hubbewegung der Sägeeinheit 6 tritt eine sich periodisch im Takt der Hubbewegung ändernde Trägheitskraft auf. Zum Ausgleichen dieser Kraft ist eine Massenausgleichseinrichtung vorhanden, die einen Schwerpunkt bildet, der beim Betrieb eine in Hubbewegungsrichtung 5 hin und her gehende, der Hubbewegung der Sägeeinheit 6 entgegengesetzte Ausgleichsbewegung ausführt.

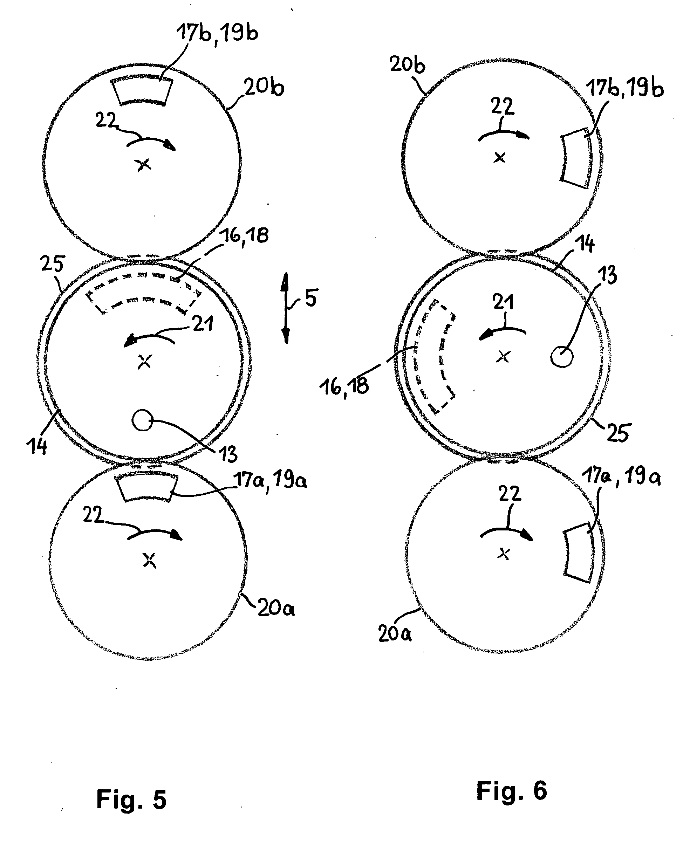

Die Massenausgleichseinrichtung weist zwei beim Betrieb gegensinnig rotatorisch umlaufende Ausgleichsmassenanordnungen 16, 17 auf (im Falle der Figuren 5 und 6 ist eine der beiden Ausgleichsmassenanordnungen in zwei Teile aufgeteilt, wie bei der späteren Beschreibung des Ausführungsbeispiels nach den Figuren 5 und 6 erläutert wird). Dabei ist die Anordnung so getroffen, dass sich die Einzelschwerpunkte der beiden Ausgleichsmassenanordnungen 16, 17 zum die Ausgleichsbewegung ausführenden Schwerpunkt der Massenausgleichseinrichtung addieren.

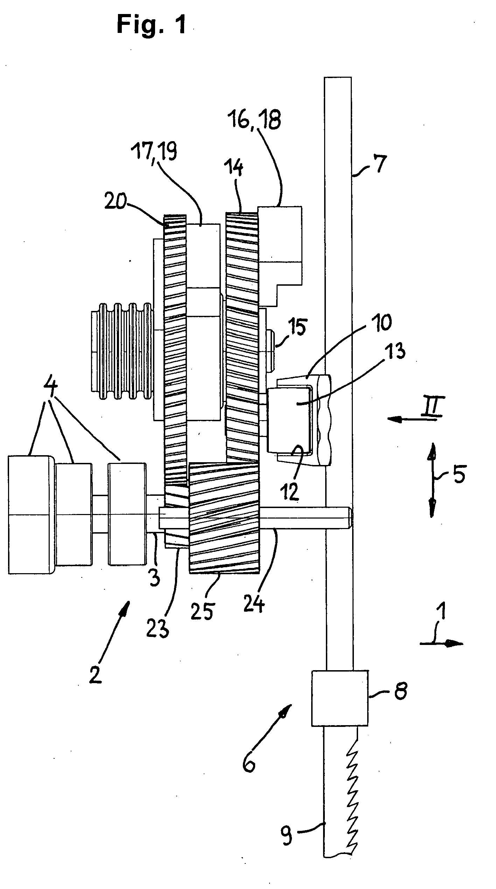

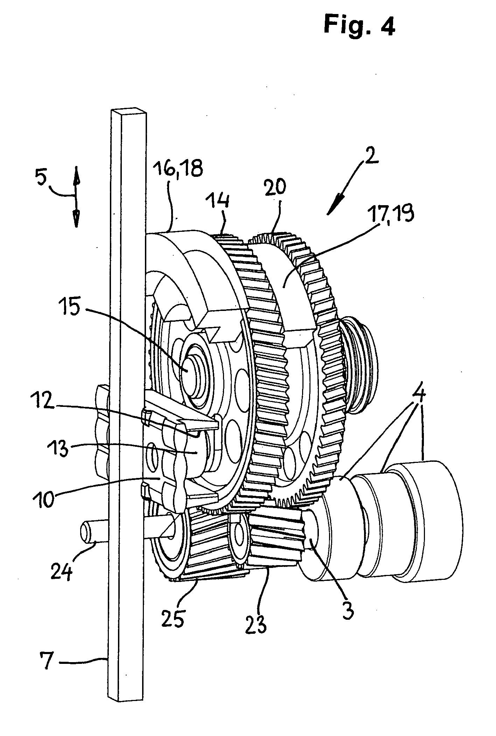

In den Figuren 1 bis 4 werden die beiden Ausgleichsmassenanordnungen 16, 17 jeweils von einem Massekörper 18, 19 gebildet, der an einem beim Betrieb rotierenden Zahnrad der Antriebseinrichtung 2 angeordnet ist. Dabei sitzt der die eine Ausgleichsmassenanordnung 16 bildende Massenkörper 18 am Antriebsrad 14. Der die andere Ausgleichsmassenanordnung 17 bildende Massenkörper 19 ist an einem beim Betrieb in entgegengesetzter Richtung wie das Antriebsrad 14 angetriebenen Ausgleichsrad 20 angeordnet, das ebenfalls von einem Zahnrad gebildet wird. Das Antriebsrad 14 und das Ausgleichsrad 20 sind zweckmäßigerweise koaxial zueinander angeordnet. Dabei kann die bereits erwähnte Lagerachse 15 nicht nur dem Antriebsrad 14 sondern auch dem Ausgleichsrad 20 zugeordnet sein, so dass das Antriebsrad 14 und das Ausgleichsrad 20 auf der beiden Rädern gemeinsamen Lagerachse 15 drehbar gelagert sind.

In der Momentanstellung der Figuren 1 bis 4 befindet sich die Sägeeinheit 6 in ihrem unteren Umkehrpunkt. Das Mitnahmeelement 13 befindet sich dabei in seinem unteren Kulminationspunkt. In dieser Momentanstellung nehmen das Antriebsrad 14 und das Ausgleichsrad 20 eine solche Drehlage ein, dass die beiden exzentrisch am Antriebsrad 14 und am Ausgleichsrad 20 sitzenden Massekörper 18, 19 in ihrem dem Mitnahmeelement 13 mit Bezug auf die Lagerachse 15 entgegengesetzten oberen Kulminationspunkt hintereinander angeordnet sind, so dass ihre Einzelschwerpunkte auf der in Hubbewegungsrichtung 5 verlaufenden, durch die Lagerachse 15 verlaufenden Linie liegen.

Beim Betrieb rotieren das Antriebsrad 14 und das Ausgleichsrad 20, wie erwähnt, in entgegengesetzten Richtungen. Dabei rotieren das Antriebsrad 14 und das Ausgleichsrad 20 mit gleicher Geschwindigkeit. Dreht sich das Antriebsrad 14 beispielsweise in Richtung gemäß Pfeil 21, dreht sich das Ausgleichsrad 20 in entgegengesetzter Richtung gemäß Pfeil 22. Ausgehend von der dargestellten Momentanstellung verlassen die beiden Massekörper 18, 19 ihren oberen Kulminationspunkt in entgegengesetzte Richtungen, so dass sich ihr gemeinsamer Schwerpunkt in der Mitte zwischen den beiden Massekörpern 18, 19 linear in Hubbewegungsrichtung 5 nach unten verlagert. Gleichzeitig bewegt sich die Sägeeinheit 6 nach oben. Der gemeinsame Schwerpunkt der beiden Massekörper 18, 19 führt daher eine der Hubbewegung der Sägeeinheit 6 entgegengesetzte Ausgleichsbewegung aus, so dass der Gesamtschwerpunkt aller bewegten Massen, d.h. der von der Sägeeinheit 6 und von den beiden Massenausgleichsanordnungen 16, 17 gebildete Gesamtschwerpunkt im Wesentlichen unverändert im Raum stehen bleibt.

Die beiden Massenausgleichsanordnungen 16, 17 weisen eine gleiche Masse auf. Dabei sind allerdings andere exzentrisch an dem Antriebsrad 14 und dem Ausgleichsrad 20 eventuell angeordnete Massen, beispielsweise das Mitnahmeelement 13, zu berücksichtigen.

Ferner sind die Einzelschwerpunkte der beiden Massenausgleichsanordnungen 16, 17 in gleichem Radius am Antriebsrad 14 und am Ausgleichsrad 20 angeordnet.

Nach einer Rotation um 180° befinden sich die beiden die Massenausgleichsanordnungen 16, 17 bildenden Massekörper 18, 19, ausgehend von der dargestellten Momentanstellung, in ihrem unteren Kulminationspunkt und das Mitnahmeelement 13 in seinem oberen Kulminationspunkt.

Der Antrieb erfolgt mittels eines an der Antriebswelle 3 angeordneten Antriebsritzels 23. Das Antriebsritzel 23 kämmt mit dem Ausgleichsrad 20, so dass dieses angetrieben wird. Das Antriebsritzel 23 kämmt ferner mit einem drehbar auf einer Zwischenwelle 24 gelagerten Zwischenzahnrad 25, das mit dem Antriebsrad 14 in Eingriff steht, das somit durch das Zwischenschalten des Zwischenrades 25 in entgegengesetzter Richtung wie das Ausgleichsrad 20 angetrieben wird.

Die Anordnung könnte auch umgekehrt so getroffen sein, dass das Antriebsritzel mit dem Antriebsrad kämmt und das Ausgleichsrad über ein Zwischenrad angetrieben wird.

Nach dieser ausführlichen Beschreibung des Ausführungsbeispiels nach den Figuren 1 bis 4 genügt zum Verständnis des zweiten Ausführungsbeispiels die schematische Darstellung der Figuren 5 und 6 und die nachfolgende kurze Beschreibung. Die erzielte Wirkung ist in beiden Fällen die gleiche.

In den Figuren 5 und 6 werden, soweit es sich um übereinstimmende Teile handelt, die gleichen Bezugsziffern verwendet. Ferner wurden der Einfachheit halber die Zahnräder nur als einfache Kreise gezeichnet.

Wiederum weist die Antriebseinrichtung ein zu einer Rotationsbewegung angetriebenes Antriebsrad 14 auf, an dem das die Sägeeinheit 6 in Hubbewegungsrichtung 5 mitmachende Mitnahmeelement 13 exzentrisch angeordnet ist. Im Unterschied zur Ausführungsform nach den Figuren 1 bis 4 sind anstelle des dortigen Ausgleichsrades 20 zwei mit dem Antriebsrad 14 kämmende, mit Bezug auf das Antriebsrad 14 entgegengesetzt zueinander angeordnete Einzelausgleichsräder 20a, 20b vorhanden. Die beiden Einzelausgleichsräder 20a, 20b sind frei drehbar gelagert und drehen sich beim Betrieb gleichsinnig und dabei entgegengesetzt zum Antriebsrad 14. Rotiert das Antriebsrad 14 beispielsweise wie in den Figuren 1 bis 4 in Richtung gemäß Pfeil 21, rotieren die beiden Einzelausgleichsräder 20a, 20b entgegengesetzt in Richtung gemäß Pfeil 22.

Die beiden Einzelausgleichsräder 20a, 20b sind in Hubbewegungsrichtung 5 beiderseits des Antriebsrades 14 angeordnet.

Ferner weisen das Antriebsrad 14 und die beiden Einzelausgleichsräder 20a, 20b einen gleich großen Durchmesser auf, so dass ihre Drehgeschwindigkeit gleich groß ist.

Wiederum sind zwei Ausgleichsmassenanordnungen vorhanden, von denen die eine Ausgleichsmassenanordnung 16 am Antriebsrad 14 oder, wie beim dargestellten Ausführungsbeispiel, an einem drehfest mit diesem verbundenen und koaxial zu diesem angeordneten Ausgleichskörper-Trägerrad 25 angeordnet ist, während die andere Ausgleichsmassenanordnung auf die beiden Einzelausgleichsräder 20a, 20b aufgeteilt ist, so dass an jedem Einzelausgleichsrad 20a, 20b ein Teil 17a bzw. 17b der anderen Ausgleichsmassenanordnung sitzt. Die beiden jeweils einen der Teile 17a, 17b bildenden Massekörper 19a, 19b sind zweckmäßigerweise gleich groß. Ferner haben sie zusammen die gleiche Masse wie der die am Antriebsrad 14 oder am Trägerrad 15 angeordnete Ausgleichsmassenanordnung 16 bildende Massekörper 18. Dabei sind allerdings wiederum andere eventuell vorhandene exzentrische Massen wie das Mitnahmeelement 13 zu berücksichtigen.

Die beiden Massekörper 19a, 19b sind mit gleicher Winkellage an den Einzelausgleichsrädern 20a, 20b angeordnet, so dass sie zusammen einen Einzelschwerpunkt der Massenausgleichseinrichtung bilden, der um die Achsrichtung des Antriebsrades 14 entgegengesetzt zur Drehrichtung 21 des am Antriebsrad 14 oder am Trägerrad 25 sitzenden, den anderen Einzelschwerpunkt der Massenausgleichseinrichtung bildenden Massekörpers 18 rotiert.

Somit ergibt sich wie beim Ausführungsbeispiel nach den Figuren 1 bis 4 ein von den beiden Ausgleichsmassenanordnungen 16 und 17a, 17b zusammen gebildeter Schwerpunkt der Massenausgleichseinrichtung, der eine der Hubbewegung der Sägeeinheit entgegengesetzte, lineare Ausgleichsbewegung ausführt.

In der Stellung der Figur 5 befindet sich die Sägeeinheit, da das Mitnahmeelement 13 in seinem unteren Kulminationspunkt angeordnet ist, in ihrem unteren Umkehrpunkt. Dementsprechend befinden sich die Massekörper 18, 19a, 19b in ihren oberen Kulminationspunkten. Figur 6 zeigt die sich nach einer Rotation um 90° ergebende Situation.

## Patentansprüche

1. Hubsägemaschine, insbesondere Stichsäge, mit einer beim Betrieb eine hin und her gehende Hubbewegung ausführenden Sägeeinheit, einer Antriebseinrichtung zum Antreiben der Sägeeinheit und einer Massenausgleichseinrichtung zum Ausgleichen der bei der Hubbewegung der Sägeeinheit auftretenden Trägheitskraft, wobei die Massenausgleichseinrichtung einen beim Betrieb eine hin und her gehende, der Hubbewegung der Sägeeinheit entgegengesetzte Ausgleichsbewegung ausführenden Schwerpunkt bildet, **dadurch gekennzeichnet, dass** die Massenausgleichseinrichtung (2) beim Betrieb gegensinnig zueinander rotatorisch umlaufende Massenausgleichsanordnungen (16, 17; 16 und 17a, 17b) aufweist, derart, dass sich die Einzelschwerpunkte der beiden Ausgleichsmassenanordnungen zum die Ausgleichsbewegung ausführenden Schwerpunkt addieren.

2. Hubsägemaschine nach Anspruch 1, **dadurch gekennzeichnet, dass** die Ausgleichsmassenanordnungen (16, 17; 16 und 17a, 17b) an beim Betrieb rotierenden Zahnrädern der Antriebseinrichtung exzentrisch angeordnet sind.

3. Hubsägemaschine nach Anspruch 2, **dadurch gekennzeichnet, dass** die Antriebseinrichtung ein beim Betrieb angetriebenes und die Sägeeinheit (6) zu ihrer Hubbewegung antreibendes Antriebsrad (14) und ein beim Betrieb in entgegengesetzter Richtung wie das Antriebsrad (14) angetriebenes Ausgleichsrad (20) aufweist, wobei am Antriebsrad (14) und am Ausgleichsrad (20) jeweils eine der Ausgleichsmassenanordnungen (16, 17) angeordnet ist.

4. Hubsägemaschine nach Anspruch 3, **dadurch gekennzeichnet, dass** das Antriebsrad (14) und das Ausgleichsrad (20) koaxial zueinander angeordnet sind.

5. Hubsägemaschine nach Anspruch 4, **dadurch gekennzeichnet, dass** das Antriebsrad (14) und das Ausgleichsrad (20) auf einer beiden Rädern gemeinsamen Lagerachse (15) drehbar gelagert sind.

6. Hubsägemaschine nach einem der Ansprüche 3 bis 5, **dadurch gekennzeichnet, dass** ein Antriebsritzel (23) das Antriebsrad (14) oder das Ausgleichsrad (20) und das jeweils andere Rad über ein Zwischenrad (25) antreibt.

7. Hubsägemaschine nach Anspruch 2, **dadurch gekennzeichnet, dass** die Antriebseinrichtung ein beim Betrieb angetriebenes und die Sägeeinheit zu ihrer Hubbewegung antreibendes Antriebsrad (14) und zwei entgegengesetzt zueinander angeordnete, mit dem Antriebsrad (14) kämmende Einzelausgleichsräder (20a, 20b) aufweist, wobei am Antriebsrad (14) oder an einem drehfest mit diesem verbundenen Ausgleichskörper-Trägerrad (25) eine der Ausgleichsmassenanordnungen und an den beiden Einzelausgleichsrädern (20a, 20b) jeweils ein Teil (17a, 17b) der anderen Ausgleichsmassenanordnung angeordnet ist.

8. Hubsägemaschine nach Anspruch 7, **dadurch gekennzeichnet, dass** die beiden Einzelausgleichsräder (20a, 20b) in Richtung der Hubbewegung beiderseits des Antriebsrades (14) angeordnet sind.

9. Hubsägemaschine nach Anspruch 7 oder 8, **dadurch gekennzeichnet, dass** das Antriebsrad (14) und die beiden Einzelausgleichsräder (20a, 20b) einen gleich großen Durchmesser aufweisen.

10. Hubsägemaschine nach einem der Ansprüche 3 bis 9, **dadurch gekennzeichnet, dass** das Antriebsrad (14) ein exzentrisch an ihm angeordnetes, stirnseitig abstehendes Mitnahmeelement (13) trägt, das in einer an der Sägeeinheit (6) angeordneten, quer zur Richtung (5) der Hubbewegung verlaufenden Führungsnut (12) bewegbar gelagert ist.
